# EUROPEAN PATENT APPLICATION

(11) **EP 1 857 786 A2**
(43) Date of publication of application: **21.11.2007**
(21) Application number: 06466016.0
(22) Date of filing: 24.11.2006
(51) Int. Cl.: G01G 17/02

(54) **The substance applied to the surface of car components as an inherent part of the automatic weight system**

(30) Priority: 19.05.2006 CZ 200617749 U
(71) Applicant: IACG.s.r.o., 334 01 Prestice (CZ)
(72) Inventor: Kacha Frantisek, 34562 Holysov (CZ)
(74) Representative: Langrova, Irena

(57) **Abstract**

The substance applied to the surface of car components as an inherent part of the Automatic Weight System supported by a simultaneous evaluation of weight gain per each of the individual car component based on predetermined tolerance. The system consists of an Input Weight Scale (1) and minimum two Weight Scales with a Stroke (2, 3). There is a device (4) situated between the Input Weight Scale (1) and the Weight Scale (2) applying material and the device (5) for spray application and/or material coating applied to the surface of car components is always between Weight Scales (2, 3).

There is a Conveyer (6) situated in the position above both Weight Scales (2, 3). Its Carrier Surface is a pull-through surface formed in the following way that the Weight Bridge Device (10) of the scales (2, 3) when travelling vertically passes from the initial position bellow the Conveyer (6) via the Carrier Surface of the Conveyer (6) to the upper position above it.

There is a Terminal (7) as a part of the whole system enabling to measure the weight gain of each car component. The Terminal (7) is electronically interconnected with each Weight Scale (1, 2, 3). The Information Board (8) and the Data Collecting Station (9) are also parts of the system. The Terminal (7) could be connected to the devices (4, 5) to enable their automatic adjustment of parameters' set-up of the devices (4, 5).

## Description

### Technical Field

The technical solution concerns the Automatic Weight System connected to the substance coating applied on the surface of car components. The design falls within the area of appliances and methods suitable for material weighing such as liquid or powder material or weighing the material at the moment of its discharge.

### State of the Prior Art

Currently known system associated with the control of the amount of the substance coated - the most frequently some adhesive substances - applied on the surface of components consists in intermittent detection of the difference in weight applied prior to coating and after application of the substance on the surface of the part. Such an operation is performed outside the production line and is performed manually. A random sample component is selected, weighed outside the production line before and after the substance coating implemented. Throughout such an examination of the substance applied to the component practised in this way, the tested component is frequently damaged.

Another possibility how to check the amount of the substance coated is a method to weigh only a certain segment of the component, identically before and after the substance coating. It is considered rather a destructive method resulting in a total destruction of the car component.

The disadvantage of such a way reflects uneconomical load of the production process, data shortages concerning the amount of the substance coated and a slow-paced process of the examination.
Methods executed so far do not have an ability to prove the amount of the substance coated per each manufactured component.

### Disclosure of the Invention

The substance coating on the surface of car components as an inherent part of the Automatic Weight System executed under the simultaneous evaluation of weight gains per each component is based on a preliminary determined tolerance. The core is based on the fact that the system comprises the Input Weight Scale and minimum two Scales with a Stroke.
There is a substance coating device situated between the Input Weight Scale and the Scale with a Stroke and between both scales there is the device for spraying and/or coating of the material on the surface of car components. There is a Conveyer located in the upper position above both Weight Scales, its Carrier Surface is a pull-through surface formed that the Weight Bridge Device of the Scales enabling the Stroke, when travelling vertically, passes from the initial position bellow the Conveyer via the Carrier Surface to its upper position above. The Terminal is an integral part of the system enabling to detect weight gains of each car component and is electronically interconnected with the Input Weight Scale as well as each of the Weight Scales with the Stroke. Thereinafter, the Information Board and the Data Collecting Station are integral parts of the whole system.

The advantage of such a system rests in usage of this system in production places where the final product comprises several components and where is necessary to examine and control the amount of substance coated.

### Review of Figures

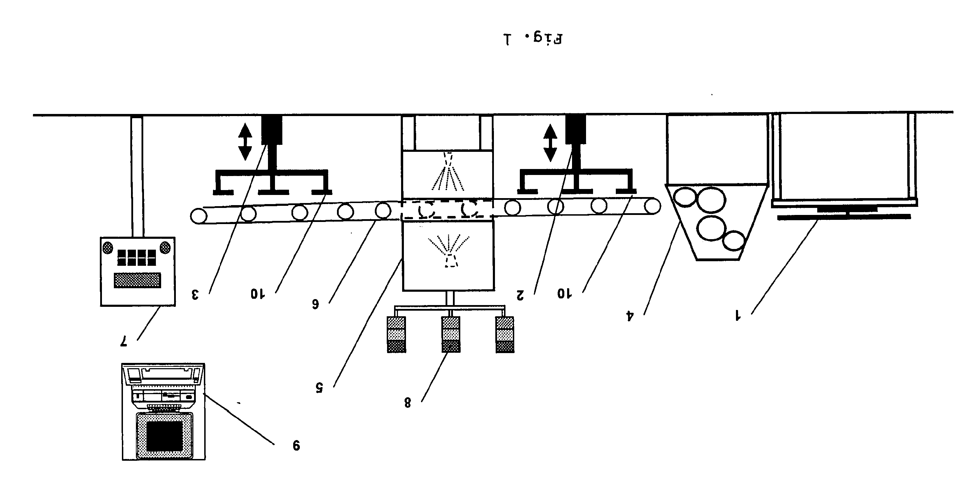

An exemplary design of the proposed solution is described including a given reference to the drawing, which depicts a schematic drawing of the Automatic Weight System incorporated into the production line in Figure 1.

### Examples on the Invention Embodiment

### Example 1

The integral part of the production line manufacturing interior components for cars is the Automatic Weight System interconnected to the adhesive substance coating on the surface of car components. Simultaneously, the weight gain per each car component is evaluated according to the predetermined tolerance.

The system comprises the Input Weight Scale 1 and two Weight Scales with the Stroke 2, 3. There is a device 4 enabling the coating of adhesive substance situated between the Input Weight Scale and the Weight Scale 2.
There is a device 5 for water spraying of the surface of car components situated between both scales 2, 3.
The Conveyer 6 is placed in the position above both Weighing Scales 2, 3, whose Carrier Surface is formed by strings. The Weight Bridge Device 10 of the scales 2, 3 when travelling vertically passes from the initial position below the Conveyer 6 through the Carrier Surface to the position above the Conveyer 6.
The Terminal 7 in an integral part of the system, it is electronically interconnected to each Weight Scale 1, 2, 3.
Its function is dedicated to detection of the weight gain identified per each car component, and thus a detection of the amount of adhesive substance coated and water sprayed. Subsequently, such indicated amount is compared to required and feasible tolerance in the Terminal 7 and an evaluation is performed, whether the coated amount of adhesive substance and water corresponds to the image depicted in the Information Board 8.
Gained information is posted to the Data Collecting Station 9, where is stored, subsequently statistically and graphically evaluated.

### Example 2

The Automatic Weight System connected to the substance coating on the surface of car components was elaborated on the basis of the proposed solution at the same way as was mentioned in the Example 1. The only difference is with the device 4 providing coating of the surface of the car component with the Frost Glass and the device 5 applying the adhesive substance.

### Example 3

Pursuant to the Example 1, the system was elaborated accordingly with a difference in the device 4 coating the surface of the car component with the paint and the device 5 coating some Curing Agent.

### Example 4

Pursuant to the Example 1, the system was elaborated accordingly with a difference in the Terminal 7 that is connected to devices 4 and 5, concurrently. The Terminal 7 automatically adjusts parameters setup of the devices depicted as 4 and 5 depending on results of comparison of amounts coated and deviations.

### Industrial Availability

Practical side of such a proposed solution could be implemented within the automotive or furniture industries. It could be implemented in every field of industry where the final product comprises several components and where it is necessary to check and control the amount of coated material in the duration of the product manufacturing.

### Index list

- 1 -: Input Weight Scale
- 2,3 -: Weight Scale with Stroke
- 4 -: Substance Coating Device
- 5 -: Device for spraying and/or coating application of liquid or powder material
- 6 -: Conveyer
- 7 -: Terminal
- 8 -: Information Board
- 9 -: Data Collecting Station
- 10 -: Weight Bridge Device

## Claims

1. The substance applied to the surface of car components as an inherent part of the Automatic Weight System supported by a simultaneous evaluation of weight gains per each car component based on a preliminary determined tolerance **characterized by** the fact that the system comprises the Input Weight Scale (1) and minimum two Weight Scales (2, 3) with a stroke, there is a device (4) situated between the Input Weight Scale (1) and the scale (2) applying the substance, and the device (5) for spray application and/or material coating applied to the surface of the car components is always between Weight Scales (2, 3), herewith the Conveyer (6) is located in the upper position above both scales with a stroke (2, 3) whose Carrier Surface is established as a pull-through surface, thus the Weight Bridge Device (10) of the scales (2, 3) when travelling vertically passes from the initial position bellow the Conveyer (6) via the Carrier Surface of the Conveyer (6) to the upper position above the Conveyer (6), the Terminal (7) is a part of the whole system enabling to detect the weight gains per each part and is electronically interconnected with each Weight Scale (1, 2, 3), thereinafter the Information Board (8) and the Data Collecting Station (9) are also parts of the system.

2. The substance applied to the surface of the car component as an inherent part of the Automatic Weight System, given by the Claim 1, **characterized by** the fact that the Terminal (7) is simultaneously interconnected with devices (4, 5) to enable automatic adjustment of parameters' set-up of the devices (4, 5).
